# EUROPEAN PATENT SPECIFICATION

(11) **EP 3 522 507 B1**
(45) Date of publication and mention of the grant of the patent: **28.04.2021**
(21) Application number: 18154721.7
(22) Date of filing: 01.02.2018
(51) Int. Cl.: H04M 1/04, H04B 1/3888, H04B 1/3877, G06F 1/16, B60R 11/02, A45F 5/00

(54) **HOLDING DEVICE FOR A MOBILE DEVICE**
HALTEVORRICHTUNG FÜR EINE MOBILE VORRICHTUNG
DISPOSITIF DE SUPPORT POUR DISPOSITIF MOBILE

(43) Date of publication of application: 07.08.2019
(73) Proprietor: Rohde & Schwarz GmbH & Co. KG, 81671 München (DE)
(72) Inventor: STRITT, Michael, 4625 Oberbuchsiten (CH)
(74) Representative: Prinz & Partner mbB

(56) References cited:
- US-A- 4 248 366
- US-A1- 2005 221 762
- US-A1- 2006 186 150
- US-A1- 2013 081 969
- US-A1- 2014 259 538
- US-A1- 2015 288 406

## Description

The invention refers to a holding device for a mobile device, in particular for a smartphone.

Holding devices for mobile devices such as smartphones are well known. However, such holding devices are usually customized for a specific type of device, both in terms of design and holding function.

Yet, for example in the case of rental vehicles, it is desired that different types of mobile devices can be reliably held in a single holding device.

Holding devices are known which can at least to a slight extent adapt to devices with similar geometric dimensions. However, these holding devices reach their limits when it comes to devices with different external dimensions.

Document US 2014/0259538 A1 discloses a securement apparatus for a portable electronic device including a body having a panel and a plurality of elastomeric retainers secured to and extending from the panel.

Document US 2006/0186150 A1 describes a holder for securing a personal portable electronic item or other personal item on a person.

Document US 2013/0081969 A1 discloses an apparatus for securing an electronic device to a cover. The apparatus is in the form of a clip that uses a 3-point system to provide a secure hold on a device without requiring any holes in the device.

Document US 2005/0221762 A1 describes a cellular phone holster for carrying a cellular phone on a user's body with a holster body and an adjustable carrying arrangement.

Document US 2015/0288406 A1 discloses a stretchable strap cover for a handheld electronic device with a flexible and elastic pad with four apertures formed in the pad and extending through the thickness of the pad.

Document US 4,248,366 discloses a carrier for beverage containers which comprises a casing being formed of a flexible material with a cord threaded to the casing.

Therefore, it is an object of the present invention to provide a holding device which is able to reliably hold various mobile devices which differ from each other in their outer dimensions.

According to the invention, this problem is solved by providing a holding device for a mobile device comprising a flexible material, wherein at least one positioning feature is provided which is configured to prevent the mobile device from slipping out of the holding device, and further comprising a tensioning strap being connected to the flexible material which is configured to pull the positioning feature towards an abutment being formed in the holding device in order to reliably hold the mobile device within the holding device wherein the abutment is a fold in the flexible material which is formed by tightening the tensioning strap and the flexible material is a non-elastic material and the tensioning strap is elastic.

Such a holding device has the advantage that it can be flexibly adapted to different geometries of different mobile devices. Furthermore, the holding device can be manufactured cost-effectively and has a low weight. Besides, the handling of the holding device is very easy.

A mobile device can be mounted in the holding device by means of the at least one positioning feature. In particular, the at least one positioning feature is configured to prevent the mobile device from slipping out of the holding device, for example due to vibrations during driving.

By means of the tensioning strap, the mobile device can be reliably fixed to the holding device. When tightening the tensioning strap, the flexible material can be bent and thereby encompass the mobile device at least at two opposite edges. Such, the mobile device is securely held in the holding device. Due to the elasticity of the tensioning strap, the mobile device can be held in the holding device under tension.

According to one embodiment, the positioning feature comprises two elongated cut-outs which are inclined relative to a centerline of the holding device and are oriented perpendicularly to each other. The inclination of the cut-outs ensures that the corners of a mobile device are reliably held in the cut-outs and cannot slip out of them. A perpendicular arrangement of the cut-outs is particularly advantageous since most mobile devices are essentially rectangular in shape in a plan view.

Additionally or alternatively, the positioning feature may include a pocket that is formed by folding the flexible material. In particular, the flexible material may be sewn up in order to form the pocket.

Preferably, the flexible material is Y-shaped, wherein the positioning features are arranged in legs of the Y-shaped material. The Y-shape ensures that various functional elements of the mobile device are exposed and accessible to a user. Such functional elements may be different buttons, for example for volume control, sensors, camera lenses or a charging port, especially a USB port.

Due to the flexibility of the material of the holding device, an angle between the legs of the Y can be variable at least to some extent. This means that the holding device can easily adapt to mobile devices with different widths.

When tightening, the tensioning strap pulls the legs together laterally as well as in a direction towards a center of the holding device.

According to a preferred embodiment, the flexible material is provided with a rubber coating. The rubber coating also inhibits that the mobile device slips out of the holding device. The rubber coating may be applied the complete surface of the flexible material, in particular a front side and a back side of the flexible material. Alternatively, the rubber coating may be applied only to a front side of the flexible material, wherein the front side is a side which is in contact with a mobile device when one is attached to the holding device. In a preferred embodiment, the flexible material is embedded in a rubber material.

The holding device preferably comprises a fixing clip, wherein the tensioning strap is configured to be tightened by means of the fixing clip. Thereby, a tightening of the tensioning strap can be accomplished easily by pulling the tensioning strap. For example, the fixing clip is a cord stopper.

Preferably, at least two slits, in particular parallel slits, are cut in the flexible material, wherein the ends of the tensioning strap are each threaded through both of the slits. Thereby, the tensioning strap is accessible on a front side of the holding device and can be easily tightened by a user.

However, it is advantageous to provide several slits, for example three to ten slits, whereby the tensioning strap can be optionally threaded through two adjacent slits. Thereby, the holding device can be adapted to receive mobile devices with different dimensions, especially devices with different lengths.

For example, the flexible material is a textile material, a tarpaulin or a fleece. Such materials do not trigger any touch events. In particular, no metal material and no plastic material with high graphite content should be present in a touch area of the mobile device.

According to one embodiment, a Velcro material is attached to the back of the flexible material at least in a central area of the holding device. The Velcro material can be used to fasten the holding device in the interior of the vehicle, for example by attaching a corresponding counterpart of a Velcro fastener in the vehicle. Thereby, the holding device can easily be attached or detached in the vehicle interior. However, other fastening options are also possible, e. g. by means of tension straps, latching elements, adhesive tape etc.

The Velcro material may be sewn or glued to the flexible material.

The flexible material may comprise at least one flap which is arranged in the central area of the holding device. By means of the flap, the area which is available for applying a Velcro material is enlarged. Thereby, a sufficient holding force can be achieved.

Further advantages and features of the invention result from the following description and from the drawings to which reference is made. The drawings show:
- Figure 1 a holding device according to the present invention in a front view,
- Figure 2 the flexible material of a holding device according to the present invention in a back view,
- Figure 3 a holding device according to the present invention with a mobile device attached to the holding device and
- Figure 4 a detailed view of a part of a mobile device attached in the holding device.

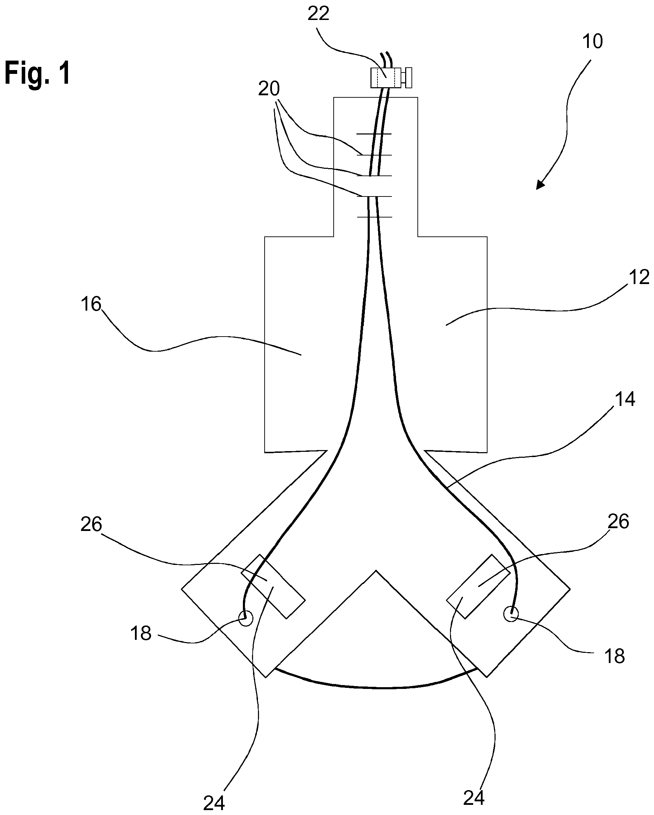

Figure 1 shows a holding device 10 according to the present invention in a front view. The holding device 10 comprises a flexible material 12 and a tensioning strap 14, in particular an elastic tensioning strap 14, which is connected to the flexible material 12.

The flexible material 12 is for example a textile material, a tarpaulin, a fleece or the like.

At least on the front side of the holding device 10, the flexible material 12 is provided with a coating, in particular a rubber coating 16, in order to increase a surface friction.

For connecting the tensioning strap 14 to the flexible material 12, several openings are provided in the flexible material 12, in particular two holes 18 and several slits 20, in particular five slits 20. The holes 18 and the slits 20 are respectively arranged near to opposite ends of the holding device 10. The tensioning strap 14 is threaded through the two holes 18 and two of the several slits 20.

Depending on the size of a mobile device to be attached, especially the length, the tensioning strap 14 can be threaded through different slits 20. In particular, the tensioning strap 14 may be threaded through the slits 20 located further inside in case of a small device, and in case of a larger device through correspondingly slits 20 located farther away from a center of the holding device 10.

In order to tighten the tensioning strap 14, a fixing clip 22 is provided. The fixing clip 22 may be a cord stop or the like.

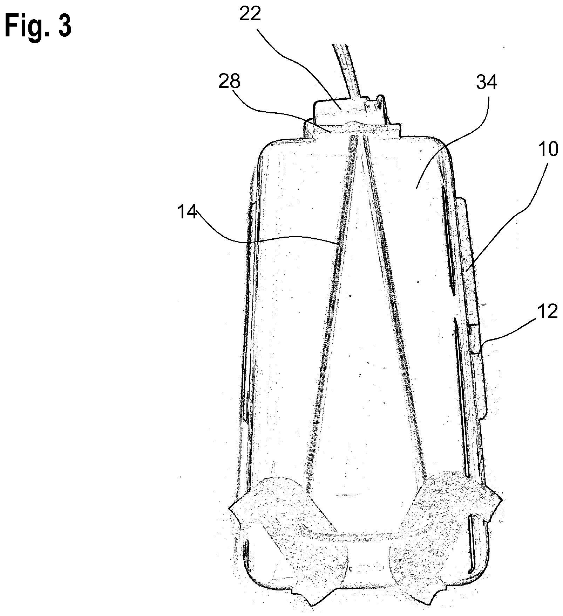

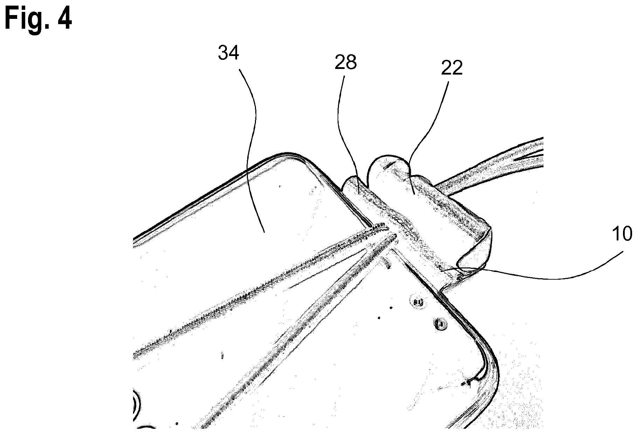

When the tensioning strap 14 is tightened in order to attach a mobile device to the holding device 10, the flexible material between the two slits 20 through which the tensioning strap 14 gets folded, thereby forming an abutment 28 against which the mobile device is pressed. Such an abutment 28 can be seen in figures 3 and 4.

For the purpose of reliably holding a mobile device in the holding device 10, two positioning features 24 are provided in the flexible material 12. In the illustrated embodiment, the positioning features 24 are elongated two cut-outs 26 in the flexible material 12, which are inclined with respect to a centerline of the holding device 10. In particular, the cut-outs 26 have a rectangular shape and are arranged perpendicular to each other.

When attaching a mobile device to the holding device 10, the corners of a mobile device should be inserted into the cut-outs 26 before tightening the tensioning strap 14. Thereby, the mobile device can be reliably held in the holding device 10.

The flexible material 12 is substantially Y-shaped. Due to this shape, functional elements which are arranged in the area of the edges of a mobile device are accessible to a user. Furthermore, the display of a mobile device is accessible.

The positioning features 24 and the holes 18 are arranged in the legs of the Y-shaped material, wherein the holes 18 are arranged on an outward facing side of the positioning features 24.

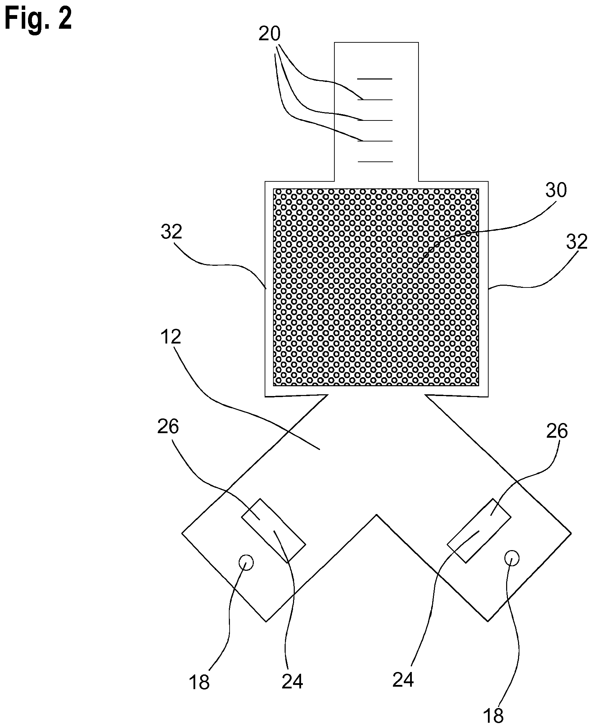

Figure 2 shows the flexible material 12 of figure 1 in a back view. In the central area of the flexible material 12, a Velcro material 30 is attached. Thereby, the holding device 10 may be fastened to an corresponding Velcro element which may be arranged in a vehicle.

The flexible material 12 comprises two lateral flaps 32 which are arranged in the central area of the flexible material 12, respectively the holding device 10. Thereby, the area to which a Velcro material 30 can be attached is enlarged.

Figure 3 shows a mobile device 34, in particular a smartphone, that is attached to a holding device 10. The legs of the Y-shaped flexible material 12 of the holding device 10 are folded around two adjacent corners of the mobile device 34 and an abutment 28 is formed between an edge of the mobile device 34 and the fixing clip 22. In particular, the abutment 28 is a fold which is formed in the flexible material 12 by tightening the tensioning strap 14. By means of the abutment 28 an adhesive force between the flexible material 12 and the mobile device 34 is improved, such that the mobile device 34 is securely retained in the holding device 10. Furthermore, the abutment 28 inhibits that the fixing clip 22 might cause scratches on the mobile device 34.

Figure 4 shows a detailed view of a section of the mobile device 34 in the holding device 10, in particular an enlarged view of the abutment 28.

## Claims

1. Holding device (10) for a mobile device (34), comprising a flexible material (12), wherein at least one positioning feature (24) is provided which is configured to prevent the mobile device (34) from slipping out of the holding device (10), and further comprising a tensioning strap (14) being connected to the flexible material (12) which is configured to pull the positioning feature (24) towards an abutment (28) being formed in the holding device (10) in order to reliably hold the mobile device (34) within the holding device (10), **characterized in that** the abutment (28) is a fold in the flexible material (12) which is formed by tightening the tensioning strap (14) and **in that** the flexible material (12) is a non-elastic material and the tensioning strap (14) is elastic.

2. Holding device (10) according to claim 1, wherein the positioning feature (24) comprises two elongated cut-outs (26) which are inclined relative to a centerline of the holding device (10) and perpendicular to each other.

3. Holding device (10) according to any of the preceding claims, wherein the flexible material (12) is Y-shaped, and wherein the positioning feature (24) is arranged in legs of the Y-shaped material.

4. Holding device (10) according to any of the preceding claims, wherein the flexible material (12) is provided with a rubber coating (16).

5. Holding device (10) according to any of the preceding claims, wherein the holding device (10) comprises a fixing clip (22), wherein the tensioning strap (14) is configured to be tightened by means of the fixing clip (22).

6. Holding device (10) according to any of the preceding claims, wherein at least two slits (20) are cut in the flexible material (12), wherein the ends of the tensioning strap (14) are each threaded through both of the slits (20).

7. Holding device (10) according to any of the preceding claims, wherein the flexible material (12) is a textile material, a tarpaulin or a fleece.

8. Holding device (10) according to any of the preceding claims, wherein a Velcro material (30) is attached to the back of the flexible material (12) at least in a central area of the holding device (10).

9. Holding device (10) according any of the preceding claims, wherein the flexible material (12) comprises at least one flap (32) which is arranged in the central area of the holding device (10).

## Patentansprüche

1. Haltevorrichtung (10) für eine mobile Vorrichtung (34), umfassend ein flexibles Material (12), wobei mindestens ein Positionierungsmerkmal (24) vorgesehen ist, das dazu ausgelegt ist, ein Herausrutschen der mobilen Vorrichtung (34) aus der Haltevorrichtung (10) zu verhindern, und ferner umfassend ein mit dem flexiblen Material (12) verbundenes Spannband (14), das dazu ausgelegt ist, das Positionierungsmerkmal (24) in Richtung eines in der Haltevorrichtung (10) ausgebildeten Widerlagers (28) zu ziehen, um die mobile Vorrichtung (34) zuverlässig in der Haltevorrichtung (10) zu halten, **dadurch gekennzeichnet, dass** das Widerlager (28) eine Falte in dem flexiblen Material (12) ist, die durch Spannen des Spannbandes (14) gebildet wird, und dass das flexible Material (12) ein nicht-elastisches Material ist und das Spannband (14) elastisch ist.

2. Haltevorrichtung (10) nach Anspruch 1, wobei das Positionierungsmerkmal (24) zwei längliche Aussparungen (26) aufweist, die relativ zu einer Mittellinie der Haltevorrichtung (10) geneigt und senkrecht zueinander sind.

3. Haltevorrichtung (10) nach einem der vorstehenden Ansprüche, wobei das flexible Material (12) Y-förmig ist, und wobei das Positionierungsmerkmal (24) in Schenkeln des Y-förmigen Materials angeordnet ist.

4. Haltevorrichtung (10) nach einem der vorstehenden Ansprüche, wobei das flexible Material (12) mit einer Gummibeschichtung (16) versehen ist.

5. Haltevorrichtung (10) nach einem der vorstehenden Ansprüche, wobei die Haltevorrichtung (10) eine Befestigungsklammer (22) aufweist, wobei das Spannband (14) dazu ausgelegt ist, mittels der Befestigungsklammer (22) gespannt zu werden.

6. Haltevorrichtung (10) nach einem der vorstehenden Ansprüche, wobei mindestens zwei Schlitze (20) in das flexible Material (12) geschnitten sind, wobei die Enden des Spannbandes (14) jeweils durch beide Schlitze (20) gefädelt sind.

7. Haltevorrichtung (10) nach einem der vorstehenden Ansprüche, wobei das flexible Material (12) ein textiles Material, eine Plane oder ein Vlies ist.

8. Haltevorrichtung (10) nach einem der vorstehenden Ansprüche, wobei auf der Rückseite des flexiblen Materials (12) zumindest in einem mittleren Bereich der Haltevorrichtung (10) ein Klettmaterial (30) angebracht ist.

9. Haltevorrichtung (10) nach einem der vorstehenden Ansprüche, wobei das flexible Material (12) mindestens eine Klappe (32) aufweist, die im mittleren Bereich der Haltevorrichtung (10) angeordnet ist.

## Revendications

1. Dispositif de support (10) pour un dispositif mobile (34), comprenant un matériau flexible (12), dans lequel est prévue au moins une caractéristique de positionnement (24) qui est configurée pour empêcher le dispositif mobile (34) de glisser hors du dispositif de support (10), et comprenant en outre une sangle de tension (14) qui est raccordée au matériau flexible (12) qui est configurée pour tirer la caractéristique de positionnement (24) vers une butée (28) qui est formée dans le dispositif de support (10) afin de supporter, de manière fiable, le dispositif mobile (34) à l'intérieur du dispositif de support (10), **caractérisé en ce que** la butée (28) est un pli dans le matériau flexible (12) qui est formé en serrant la sangle de tension (14) et **en ce que** le matériau flexible (12) est un matériau non élastique et la sangle de tension (14) est élastique.

2. Dispositif de support (10) selon la revendication 1, dans lequel la caractéristique de positionnement (24) comprend deux découpes allongées (26) qui sont inclinées par rapport à un axe central du dispositif de support (10) et perpendiculaires entre elles.

3. Dispositif de support (10) selon l'une quelconque des revendications précédentes, dans lequel le matériau flexible (12) est en forme de Y, et dans lequel la caractéristique de positionnement (24) est agencée dans les pattes du matériau en forme de Y.

4. Dispositif de support (10) selon l'une quelconque des revendications précédentes, dans lequel le matériau flexible (12) est prévu avec un revêtement en caoutchouc (16).

5. Dispositif de support (10) selon l'une quelconque des revendications précédentes, dans lequel le dispositif de support (10) comprend une pince de fixation (22), dans lequel la sangle de tension (14) est configurée pour être serrée au moyen de la pince de fixation (22).

6. Dispositif de support (10) selon l'une quelconque des revendications précédentes, dans lequel au moins deux fentes (20) sont découpées dans le matériau flexible (12), dans lequel les extrémités de la sangle de tension (14) sont chacune enfilées à travers les deux fentes (20).

7. Dispositif de support (10) selon l'une quelconque des revendications précédentes, dans lequel le matériau flexible (12) est un matériau textile, une bâche ou un molleton.

8. Dispositif de support (10) selon l'une quelconque des revendications précédentes, dans lequel un matériau de Velcro (30) est fixé à l'arrière du matériau flexible (12) au moins dans une zone centrale du dispositif de support (10).

9. Dispositif de support (10) selon l'une quelconque des revendications précédentes, dans lequel le matériau flexible (12) comprend au moins un rabat (32) qui est agencé dans la zone centrale du dispositif de support (10).
